# EUROPEAN PATENT SPECIFICATION

(11) **EP 0 732 058 B1**
(45) Date of publication and mention of the grant of the patent: **09.06.2004**
(21) Application number: 95301643.3
(22) Date of filing: 13.03.1995
(51) Int. Cl.: A23G 3/30

(54) **Continuous gum base manufacture using paddle mixing and apparatus therefor**
Kontinuierliche Herstellung von Kaugummi-Grundmasse mittels eines Rührmischers und Vorrichtung dafür
Fabrication de gomme de base en continu au moyen d'un mélangeur à pales et équipement à cet effet

(43) Date of publication of application: 18.09.1996
(73) Proprietor: WM. WRIGLEY JR. COMPANY, Chicago, Illinois 60611 (US)
(72) Inventor: Song, Joo H., Northbrook, Illinois (US); Townsend, Donald J., Chicago, Illinois (US)
(74) Representative: Hayes, Adrian Chetwynd

(56) References cited:
- EP-A- 0 379 128
- FR-A- 2 424 708
- FR-A- 2 635 441
- US-A- 3 198 491
- FOOD MANUFACTURE, vol. 62, no. 9, September 1987 LONDON GB, pages 47-50, 'extrusion: does chewing gum pass the taste test?'

## Description

This invention relates to a continuous process for making chewing gum base and apparatus. More specifically, this invention is directed to a process for making chewing gum base using a continuous process known as paddle mixing and apparatus for making chewing gum base.

Chewing gum base is conventionally prepared using a batch mixer, for example, a sigma blade mixer, using a mixing time of from one to four hours per batch. Typically, predetermined amounts of elastomer, elastomer plasticizers and fillers are added to a heated sigma blade mixer having a front to rear blade speed ratio of about 2:1. After the initial ingredients have massed homogeneously, a balance of elastomer plasticizer, filler, softeners/emulsifiers, waxes (when used) and other ingredients are added sequentially to the batch mixer and blended until a homogeneous mass is attained. The final mass temperature can be from 60°C to 150°C, preferably from 80°C to 120°C. The completed molten mass is emptied from the mixing kettle into coated or lined pans, extruded or cast into any desirable shape and allowed to cool and solidify.

The foregoing batch process, which operates under conditions of low shear and little or no pressure, has been very effective in providing well-mixed chewing gum bases, with little or no degradation of the gum base components occurring during mixing. However, the process has the disadvantage of requiring a long mixing time. Also, because the process involves batch mixing, not at steady state, there may be small but detectable variations in color, consistency or taste between different batches.

In order to shorten the mixing time and eliminate variations between batches, consideration has been given to mixing gum base continuously. However, most known continuous mixing processes, for example, twin screw extruders, have been difficult to use successfully because their residence time is too short, i.e., on the order of a few minutes. This extreme shortening of residence time has made it difficult to produce a homogeneous gum base without lumps, islands, and other inconsistencies.

U.S. Patent 3,995,064, issued to Ehrgott et al., discloses the concept of making chewing gum base continuously. To accomplish this, the gum base must be exposed to some mixing under high intensity and shear, in order to disperse the elastomer. However, high shear mixing may increase the amount of degraded gum base ingredients in the product. Also, the reference recommends using a number of separate preblending operations to help achieve product homogeneity.

French Publication No. 2,635,441, to Boudy, discloses making a gum base concentrate using a continuous process. Polymers, plasticizers and fillers are introduced into different sleeves of a twin screw extruder having a residence time not exceeding 1.5 minutes. The twin screw extruder includes a region of high shear mixing to help disperse the ingredients. Later, the gum base premix is combined with other gum base ingredients using a separate process.

European Publication No. 0,273,809, to Horst, discloses a process for making a chewing gum base using an industrial mill. Elastomer and filler are fed to the mill, heated, and mixed for 35 to 75 minutes, to produce a gum base premix. The premix is then discharged from the mill, fragmented, and combined with other gum base ingredients using a powder mixer.

U.S. Patent 4,217,368 issued to Witzel et al., and U.S. Patent 4,208,431, issued to Friello et al., disclose standard batch gum base processes using sigma blade mixers. U.S. Patent 4,968,511, issued to D'Amelia et al., discloses a direct one-step process for making a chewing gum without the intermediate step of forming a chewing gum base, using a specific mixture of ingredients. A paddle is described in US Patent 3,198,491.

Notwithstanding the foregoing efforts, there remains a need or desire in the chewing gum industry for an effective method of making a chewing gum base continuously, to save time and eliminate inconsistencies between batches, without using high shear or employing multiple preblending steps.

According to the present invention there is provided a continuous method of making chewing gum base, comprising the steps of:
providing a mixer which includes a plurality of kneading elements and conveying elements arranged on one or more shafts, the kneading elements covering at least 30% of one or more shafts for mixers with an L/D ratio greater than 40/1 and at least 40% of one or more shafts for other mixers;
continuously feeding gum base ingredients comprising from 5 to 95 wt% elastomer, from 0 to 75 wt% elastomer plasticizer, from 0.5 to 40 wt% softeners/emulsifiers, and from 1 to 65 wt% fillers/texturizers to the mixer; and
continuously blending the ingredients using the kneading elements until a homogeneous gum base is obtained;
wherein the kneading elements comprise mixer paddles which mix the gum ingredients without facilitating significant forward conveyance of the gum ingredients through the mixer.

According to the present invention there is also provided a chewing gum base paddle mixer for use in continuously manufacturing chewing gum base from ingredients comprising elastomer, elastomer plasticizer, softener/emulsifier and filler;
the mixer comprising a plurality of kneading elements and conveying elements arranged and supported on one or more shafts, the kneading elements comprising mixing paddles, the mixing paddles covering at least 30% of the shafts for mixers with an L/D ratio greater than 40/1 and at least 40% of one or more shafts for other mixers and being adapted such that the mixing paddles mix the gum base ingredients without facilitating significant forward conveyance of the ingredients through the mixer and at least one of the conveying elements being arranged to convey the gum base ingredients forward through the mixer;
the arrangement of the mixer paddles and other kneading elements being such that the mixer continuously manufactures gum base from the ingredients without any of one or more of the ingredients having to have been homogeneously mixed with any one or more of the other ingredients before being fed into the mixer.

Preferably the present method and apparatus uses low shear, very little pressure, and a mixing residence time which is higher than for a typical twin screw extrusion process yet much lower than for conventional batch processes for making gum base. The mixing is accomplished using a sequence of kneading elements. Some of the kneading elements can be arranged at "right hand" angles to convey the gum base ingredients forward through the mixer. The kneading elements also comprise "mixing paddles" which have a "neutral" arrangement that is neither "right hand" nor "left hand", to continuously mix the gum base ingredients without facilitating significant forward conveyance. A few of the kneading elements can have a "left hand" arrangement which helps fill the downstream end of the mixer with gum base before the gum base is pushed through the exit nozzle or "die".

In addition to the kneading elements described herein, a wide variety of kneading elements, available from various extruder companies, can be used. The kneading elements often called paddles, have the effect of mixing in an extruder. Paddles can be two-sided, three-sided, or multiple sided.

The mixer is preferably partially open at the top, and there is virtually no pressure exerted by the gum base ingredients against barrel walls of the mixer. Although some conveying elements are used at the feed ports, the plurality of mixing paddles cover at least 30% of the shaft (for mixers with L/D ratio greater than 40/1), preferably 40% of the shaft, more preferably 50% of the shaft and most preferably 60% of the shaft. This relatively high ratio of mixing paddles to conveying elements allows for low pressure mixing and long residence times. The individual kneading elements can be mounted on two parallel co-rotating shafts inside the mixer, and the kneading elements on the adjacent shafts can intermesh during rotation. By configuring most of the mixing paddles in a neutral fashion, the forward conveyance of the gum base ingredients is minimized, and the residence time is increased to a level high enough to cause formation of a homogenous gum base mass. The kneading elements can also include "right hand helical" paddle elements to facilitate conveyance, and "left hand helical" paddle elements to help fill the mixer at its downstream end, prior to exit of the gum base. Notwithstanding the possible presence of helical paddle elements, the mixing of the gum base ingredients is accomplished predominantly, if not substantially entirely, using non-helical (i.e. flat) mixing paddles.

The various gum base ingredients may be added at more than one location in the paddle mixer, i.e., at different axial locations along the sequence of paddles. This allows a first group of gum base ingredients, for example, elastomer and filler, to become mixed before further gum base ingredients are added. In order to increase the residence time, and increase the flexibility of adding different ingredients at different locations, two or more paddle mixers can be used in series. Alternatively, some of the same advantages can be accomplished by increasing the ratio of length to diameter (L/D) of the sequence of paddles in a single paddle mixer.

It is a feature and advantage of one embodiment of the invention to provide a process for continuous gum base manufacture which preferably achieves homogeneous mixing of gum base ingredients using a much lower mixing residence time than conventional batch processes.

It is also a feature and advantage of one embodiment of the invention to provide a continuous gum base manufacturing process which preferably operates substantially at steady state, thereby minimizing the interruptions and possible inconsistencies associated with batch processes.

It is also a feature and advantage of one embodiment of the invention to provide a continuous gum base manufacturing process which preferably may operate under conditions of low shear and melt pressure, thereby minimizing degradation of gum base ingredients.

It is also a feature and advantage of one embodiment of the invention to provide a continuous gum base mixing process which preferably can be divided into stages, whereby a first group of gum base ingredients can be added to the mixer and blended upstream from the addition point of a second group of gum base ingredients.

It is also a feature and advantage of one embodiment of the invention to provide a continuous gum base manufacturing process which preferably reduces or eliminates the need for preblending of some of the gum base ingredients.

The foregoing and other features and advantages of the invention will become further apparent from the following detailed description of the presently preferred embodiments, read in conjunction with the accompanying drawings. The detailed description and drawings are merely illustrative rather than limiting, the scope of the invention being defined by the appended claims and equivalents thereof.

### BRIEF DESCRIPTION OF THE DRAWINGS

FIG. 1 is a perspective view of a single flat mixing paddle as used in the method of the invention.

FIG. 2 is a side view of the mixing paddle of FIG. 1.

FIG. 3(a) is a front view of the mixing paddle of FIG. 1, shown at zero degrees rotation (referred to as the no. 1 position).

FIG. 3(b) is a front view of the mixing paddle of FIG. 1, shown at 45 degrees counter-clockwise rotation (referred to as the no. 2 position).

FIG. 3(c) is a front view of the mixing paddle of FIG. 1, shown at 90 degrees counter-clockwise rotation (referred to as the no. 3 position).

FIG. 3(d) is a front view of the mixing paddle of FIG. 1, shown at 135 degrees counter-clockwise rotation (referred to as the no. 4 position).

FIG. 4(a) is a perspective view of a feeding element (not a paddle element) used in the feed areas of a paddle mixer.

FIG. 4(b) is a front view of the feed element of FIG. 4(a).

FIG. 5(a) is a perspective view of a forward helical mixing paddle which can be used in accordance with the method of the invention.

FIG. 5(b) is a front view of the forward helical mixing paddle of FIG. 5(a).

FIG. 5(c) is based on a top view of the forward helical mixing paddle of 5(a), showing only the top intersection line 22 superimposed over the bottom intersection line 20, and a reference line 21.

FIG. 6(a) is a perspective view of a reverse helical mixing paddle which can be used in accordance with the method of the invention.

FIG. 6(b) is a front view of the reverse helical mixing paddle of FIG. 6(a).

FIG. 6(c) is based on a top view of the reverse helical mixing paddle of FIG. 6(a), showing only the top intersection line 22 superimposed over the bottom intersection line 20, and a reference line 21.

FIG. 7 is a perspective view of an overall paddle mixing configuration reflecting the presently preferred embodiment of a paddle mixer.

FIG. 8 is a schematic illustration of a barrel and feeder arrangement which can be used in conjunction with the paddle mixer configuration shown in FIG. 7.

FIG. 9 is a front sectional cutout of a barrel, showing the relationship between the rotating paddles and the barrel wall.

FIG. 10 is a schematic illustration of two paddle mixers arranged in series.

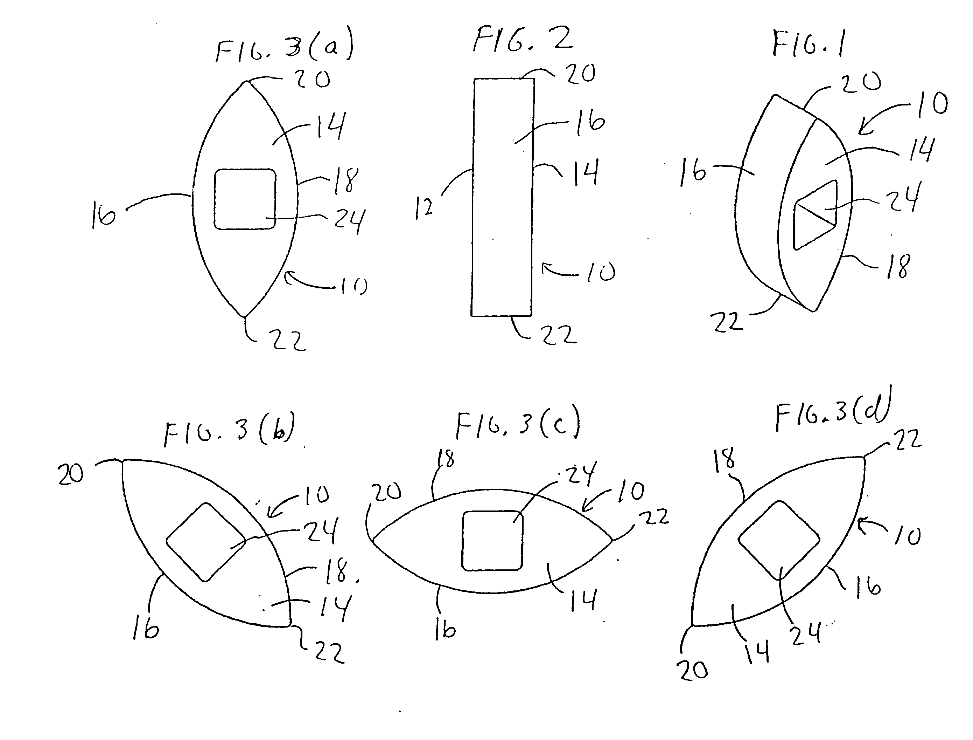

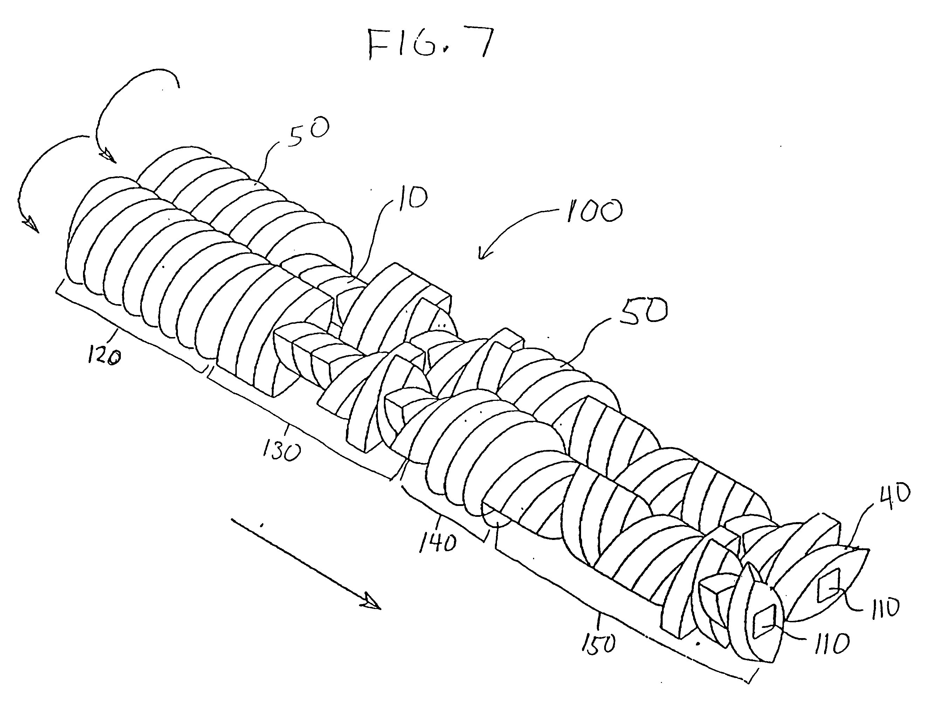

A preferred embodiment of the invention, consists of referring to FIGS. 1-3(a), a mixing paddle 10 having a flat (non-helical) configuration. The mixing paddle has four-sides having two flat surfaces 12 and 14, and two convex surfaces 16 and 18. The flat surfaces are parallel to each other and intersect only the convex surfaces. The convex surfaces oppose each other and intersect each other at two lines 20 and 22. A non-circular (preferably square) opening 24 passes through the center of each mixing paddle 10, in a direction perpendicular to the flat surfaces 12 and 14, and intersects both flat surfaces. The openings 24 are used for mounting a plurality of paddles on rotating shafts, in a predetermined sequence (FIG. 7).

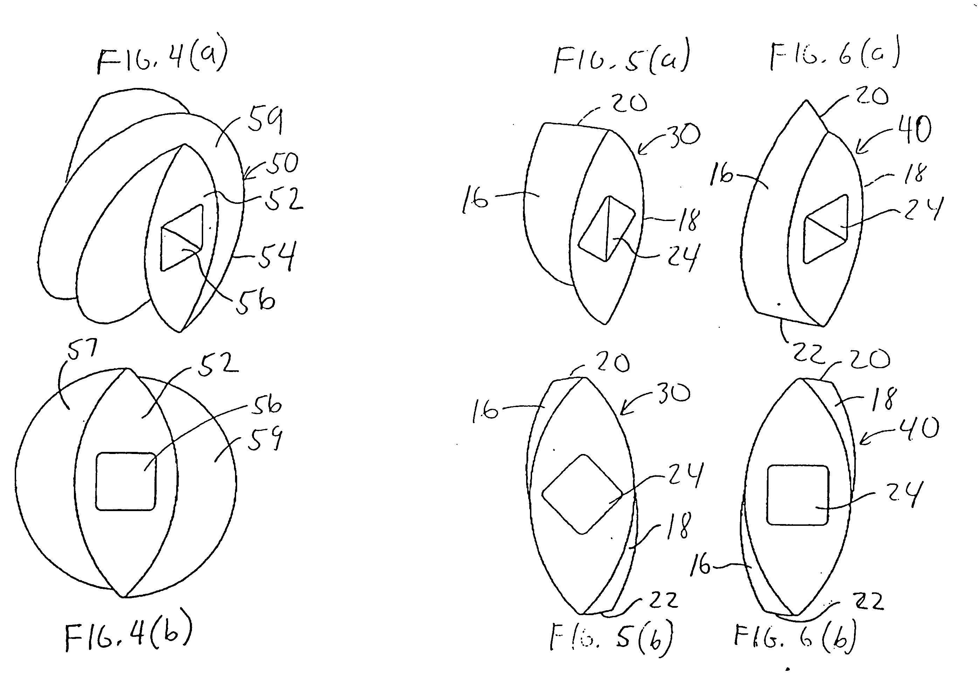

Referring to FIGS. 3(a) - 3(d), the mixing paddles 10 can be positioned on a shaft at the same or different rotational angles relative to each other. For purposes of the following description, the "No. 1 position" is defined pursuant to FIG. 3(a), wherein a straight line drawn on the flat surface 14 and intersecting the lines 20 and 22 coincides with a reference line (for example, a vertical line). The "No. 2 position" is defined pursuant to FIG. 3(b), wherein a straight line drawn on the flat surface 14 and intersecting the lines 20 and 22 is 45 degrees counter-clockwise from the reference line. The "No. 3 position" is defined pursuant to FIG. 3(c), wherein a straight line drawn on the flat surface 14 and intersecting the lines 20 and 22 is 90 degrees counter-clockwise from the reference line. The "No. 4 position" is defined pursuant to 3(d), wherein a straight line drawn on the flat surface 14 and intersecting the lines 20 and 22 is 135 degrees counter-clockwise from the reference line.

Because the paddles 10 in FIGS. 3(a) - 3(d) are symmetrical, there is no need to further define the relative rotational positions of the paddles for angles of 180, 225, 270 and 315 degrees from the reference line. For example, a paddle having a rotational position of 180 degrees coincides exactly with a paddle having a rotational angle of zero (FIG. 3(a)). Similarly, a paddle having a rotational angle of 225 degrees coincides exactly with a paddle having a rotation angle of 45 degrees (FIG. 3(b)); a paddle having a rotational angle of 270 degrees coincides exactly with a paddle having a rotational angle of 90 degrees (FIG. 3(c)), and a paddle having a rotational angle of 315 degrees coincides exactly with a paddle having a rotational angle of 135 degrees (FIG. 3(d)).

It is also understood that each mixing paddle 10 will be in constant rotation during operation of the paddle mixer, due to the rotation of the shafts supporting the paddles (FIG. 7). For purposes of describing the mixing paddles in terms of relative rotational positions (i.e. relative to each other) as explained above, the reference line should be deemed to rotate as the paddles rotate. For example, if the mixing paddles shown in FIGS. 3(a) - 3(d) are positioned sequentially on a single shaft, and if the shaft is rotated 90 degrees, then the chosen reference line, initially vertical, would rotate to a horizontal position. In other words, the relative rotational positions of the mixing paddles in FIGS. 3(a) - 3(d), defined respectively as 1-2-3-4, will not change during operation of the paddle mixer.

Referring to FIGS. 4(a) and 4(b), the method of the invention also provides for the use of a minor portion of non-paddle elements known as forward conveying or feed elements 50. Each feed element 50 has a flat front surface 52, a flat back surface 54 parallel to the front surface, and a non-circular (preferably square) opening 56 perpendicular to and intersecting the front and back surfaces. However, unlike the mixing paddles described above, the feed elements do not have two convex surfaces intersecting at two lines. Instead, each feed element 50 includes portions of two alternating helical channels 57 and 59. The helical channels are more apparent in FIG. 7 wherein a plurality of feed elements 50 are combined in sequence on the rotating shafts 110 to form feed sections in the mixer. The primary purpose of the feed elements 50 is to convey chewing gum base ingredients forward to the regions of the mixer where paddle mixing takes place.

Referring to FIGS. 5(a) and 5(b), a type of mixing paddle known as a forward helical paddle 30 can also be used with the method of the invention. When used, the forward helical paddle 30 imparts a slight forward conveying action while mixing the gum base ingredients. Like the flat mixing paddles 10, each forward helical paddle 30 has two flat surfaces 12 and 14, and two convex surfaces 16 and 18. The flat surfaces are parallel to each other and intersect only the convex surfaces. The convex surfaces oppose each other and intersect at two lines 20 and 22. Again, a non-circular (preferably square) opening 24 passes through the center of each mixing paddle 30 and intersects both flat surfaces.

The difference between the forward helical paddle 30 and the flat mixing paddle 10 is that, in the flat mixing paddle 10, the lines 20 and 22 (defining the intersections of convex surfaces 16 and 18) are parallel to each other as shown in FIG. 1. In the forward helical paddle, the line 20 has been rotated counter-clockwise with respect to the line 22 so that the lines are no longer parallel, as shown in FIG. 5(b). Similarly, the line 22 has been rotated clockwise with respect to the line 20. The effect of this rotation is to bend the convex surfaces 16 and 18 so that these surfaces have a mildly helical configuration.

Referring to FIGS. 6(a) and 6(b), a type of mixing paddle known as a reverse helical paddle 40 can also be used with the method of the invention. When used, the reverse helical paddle 40 imparts a slight resistance to forward conveying of the gum base ingredients while mixing the ingredients. This causes a locally higher degree of mixer fill and slight elevation in pressure, in the vicinity of the reverse helical paddle 40.

The reverse helical paddle 40 is configured in the same fashion as the forward helical pattern 30 discussed above, except that the lines 20 and 22 (defining the intersections of convex surfaces 16 and 18) are rotated in the opposite directions. Referring to FIG. 6(b), the line 20 has been rotated clockwise with respect to the line 22, and the line 22 has been rotated counter-clockwise with respect to the line 20. The effect of this rotation is to bend the convex. surfaces 16 and 18 so that these surfaces have a mild reverse helical configuration.

The degree of rotation of lines 20 and 22 for the forward and reverse helical paddles 30 and 40 can be explained with reference to FIGS. 5(c) and 6(c). In FIGS. 5(c) and 6(c), the helical paddles have been viewed from above and only the lines 20 and 22 of the paddles are shown, superimposed one on top of the other. A reference line 21 is also shown, indicating the positions of lines 21 and 22 if there were no rotation, as in a flat paddle 10.

Referring to FIG. 5(c), the angle "a" is the amount of counter-clockwise rotation of line 20 present in a forward helical paddle 30. the angle "a" should be from 5 to 30 degrees, preferably from 10 to 18 degrees, most preferably about 13 degrees, 53 minutes, 50 seconds. The angle "b" is the amount of clockwise rotation of line 22 present in a forward helical paddle 30. The angle "b" should be from 5 to 30 degrees, preferably from 10 to 18 degrees, most preferably about 13 degrees, 53 minutes, 50 seconds.

Referring to FIG. 6(c), the angle "a" is the amount of clockwise rotation of line 20 present in a reverse helical paddle 40. The angle "a" should be from 5 to 30 degrees, preferably from 10 to 18 degrees, most preferably about 13 degrees, 53 minutes, 50 seconds. The angle "b" is the amount of counter-clockwise rotation of line 22 present in a reverse helical paddle 40. The angle "b" should be from 5 to 30 degrees, preferably from 10 to 18 degrees, most preferably about 13 degrees, 53 minutes, 50 seconds.

Referring to FIG. 7, the mixing paddles and feed elements are assembled on two parallel shafts 110 in a predetermined configuration. In the embodiment shown, for a 127mm (5-inch) paddle mixer, each of the shafts 110 has an active length of 91.4 cm (36 inches) and a square cross-sectional area of 3.5 cm (1.375 inches) x 3.5cm (1.375 inches) 4.8 cm (1.891 square inches). The parallel shafts 110 are spaced apart at a distance of 8.9 cm (3.5 inches) (center to center). The shafts 110 are adapted for co-rotation (rotation in the same direction) inside a mixing barrel. Each of the shafts 110 supports an identical arrangement of mixing paddles and feed elements. The mixing paddles and feed elements on the adjacent shafts may intermesh, as shown in FIG. 7, but do not touch each other, as the shafts rotate.

Each of the shafts 110 is long enough to accommodate 0.91 m (thirty-six inches) of elements, each having a length of 2.5 cm (1 inch), a maximum diameter of 12.4 cm (4.874 inches) and a minimum diameter of 5.1 cm (2 inches). Two or more 2.5 cm (1-inch) segments may be combined to make longer elements without affecting the operation. For instance, the feed elements 50 often have a length of 5.1 cm (2 inches). For purposes of the invention, a large portion of each shaft should be covered with mixing paddles. Generally, at least about 40 percent of each shaft should be covered with mixing paddles. Preferably at least about 50 percent of each shaft is covered with mixing paddles, most preferably at least about 60 percent. Of the mixing paddles, a majority should be flat mixing paddles as opposed to forward helical or reverse helical paddles. In the embodiment shown in FIG. 7, 67 percent of the shaft length is covered with mixing paddles (24 one-inch elements) and 33 percent of the shaft length is covered with feed elements (6 two-inch elements).

The mixer configuration 100 in FIG. 7 includes two feed sections 120 and 140, and two paddle mixing sections 130 and 150. The specific mixer configuration is indicated in Table 1 below. In Table 1 and other tables, the following abbreviations are used:
- FC -: feed conveying element (each occupying two 2.5 cm (1-inch) positions)
- FP -: flat mixing paddle (each occupying one 2.5 cm (1-inch) position)
- FH -: forward helical mixing paddle (each occupying one 2.5 cm (1-inch) position)
- RH -: reverse helical mixing paddle (each occupying one 2.5 cm (1-inch) position)

**Table 1 :**

| Mixer Configuration (Per Shaft) - FIG. 7 | | | | | |
|---|---|---|---|---|---|
| Longitudinal Position | Element | Rotational Position | Longitudinal Position | Element | Rotational Position |
| 1 | FC | 4 | 19 | FP | 3 |
| 2 | FC | 4 | 20 | FC | 3 |
| 3 | FC | 4 | 21 | FC | 3 |
| 4 | FC | 4 | 22 | FC | 3 |
| 5 | FC | 4 | 23 | FC | 3 |
| 6 | FC | 4 | 24 | FP | 3 |
| 7 | FC | 4 | 25 | FP | 3 |
| 8 | FC | 4 | 26 | FP | 3 |
| 9 | FP | 4 | 27 | FP | 1 |
| 10 | FP | 4 | 28 | FP | 1 |
| 11 | FP | 4 | 29 | FP | 1 |
| 12 | FP | 2 | 30 | FP | 3 |
| 13 | FP | 2 | 31 | FP | 3 |
| 14 | FP | 2 | 32 | FP | 3 |
| 15 | FP | 3 | 33 | FP | 4 |
| 16 | FP | 4 | 34 | FP | 1 |
| 17 | FP | 1 | 35 | FP | 2 |
| 18 | FP | 2 | 36 | RH | 1 |

The use of two or more feed sections and two or more mixing sections in the mixer configuration 100, permits sequential addition and mixing of different gum base ingredients. For example, a high viscosity portion including elastomer, filler, and some resin or polyvinyl acetate can be continuously fed to the first feed section 120 in FIG. 7. These ingredients can then be thoroughly mixed in the first paddle mixing section 130 before being combined with additional ingredients. A lower viscosity portion including waxes (when used), fats, oils, colorants and additional resin or polyvinyl acetate can be continuously fed to the second feed section 140. All gum base ingredients can then be thoroughly mixed in the second paddle mixing section 150.

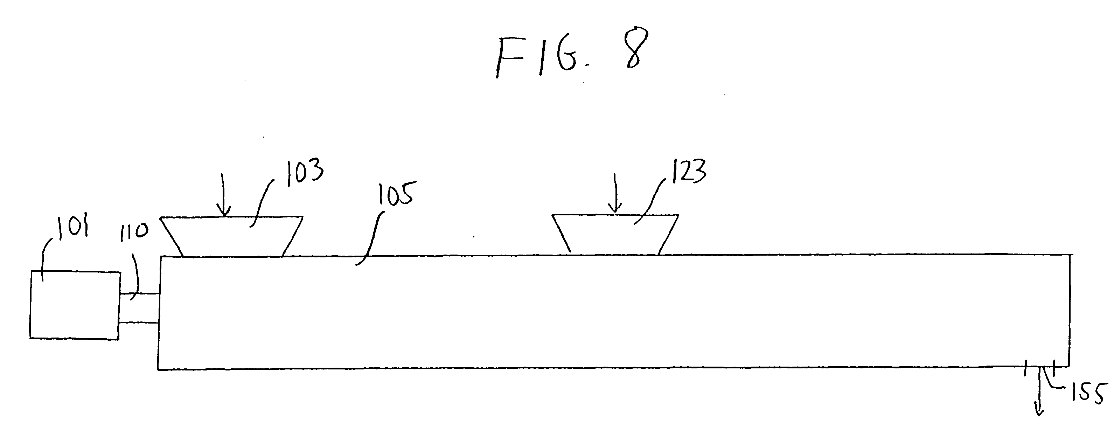

The mixer configuration 100 shown in FIG. 7 is, in practice, surrounded by one or more barrel segments extending the length of the mixer configuration 100. FIG. 8 illustrates, schematically, a typical barrel 105 surrounding the mixer configuration 100. A motor 101 drives the shafts 110 which support the mixer elements. The gum base ingredients are fed through feed ports 103 and 123 in the barrel 105. The gum base remains in the mixer for a sufficient time to ensure homogeneity, for example, a time on the order of from 20 to 30 minutes, and exits through an exit nozzle 155.

The barrel 105 may be heated or cooled. Heating may be accomplished using hot water or a steam jacket surrounding the barrel (not shown). Cooling may be accomplished by supplying cooling water to a jacket surrounding the barrel 105. Alternative methods of heating and cooling may also be employed. Generally, heating is applied at the start up, but cooling is applied in the latter stages to prevent overheating and base degradation.

The heating and cooling of the barrel should be supplied, as necessary, to maintain the product exit temperatures at from 90°C to 150°C, preferably at from 100 to 135°C, during mixing of the gum base ingredients.

FIG. 9 is a sectional view of the barrel 105 which indicates how the paddle mixer is able to operate with longer residence times, compared to a conventional twin screw extruder. As shown in FIG. 9, the barrel wall 116 has the shape of two intersecting cylinders, each cylinder having a diameter larger than the largest diameter of the mixing paddle 10 contained therein. This barrel configuration resembles that of a standard twin screw extruder. However, unlike the screws of a twin screw extruder, the paddles 10 do not mostly fill the space defined by the barrel wall 116.

The mixing paddles 10 have a typically close tolerance with the barrel wall 116, and with each other, in the vicinity of the lines 20 and 22 where the concave surfaces intersect. For paddles 10 having a long diameter of 12.4 cm (4.874 inches), the closest tolerance between each paddle and the barrel wall 116 may be on the order of from 1.2 mm (0.048 inch) to 2 mm (0.078 inch), and the closest tolerance between the two paddles may be on the order of from 1.5 mm (0.060 inch) to 2.3 mm (0.090 inch). However, away from the lines 20 and 22, the distance between each paddle 10 and the barrel wall 116 is much greater. Due to the unique design of the paddles 10, the percentage of barrel space occupied by the paddles 10 is much smaller than for a conventional twin screw extruder. Also, the pressure in the paddle mixer should remain below about 345 kPa (50 psig), preferably below about 138 kPa (20 psig) when there is a large percentage of paddles compared to other elements. Each paddle 10, when viewed from the front as in FIG. 9, has a smaller width than height. Preferably, the ratio of height to width of each mixing paddle is more than 1.5:1. Most preferably, the ratio of height to width for each mixing paddle is more than 2:1.

The large amount of available barrel space also allows the method of the invention to be practiced at high residence times. The high proportion of mixing paddles, especially flat paddles, also contributes to the longer residence times and lower pressure. The average residence time in the paddle mixer should be at least about 10 minutes, preferably more than 15 minutes, most preferably more than 20 minutes.

The remaining operating parameters, e.g., mixer rpm, feed rates, production rates, etc. vary depending on the size of the mixer and on the specific gum base composition. A commercially available paddle mixer suitable for practicing the invention is a Teledyne Readco Continuous Processor, available from Teledyne Readco in York, Pennsylvania. These paddle mixers are available in a wide variety of sizes. Paddle diameters for the different size mixers range from 5 cm (2) to 61 cm (24 inches), and the ratios of mixer length to diameter (L/D) range from 4:1 to 14:1. For purposes of the present invention, the maximum paddle diameter is preferably from 5 cm (2 inches) to 12.7 cm (5 inches), and the L/D is preferably about 7:1. The paddle mixer configuration and process conditions should be selected so that a homogeneous gum base product is achieved.

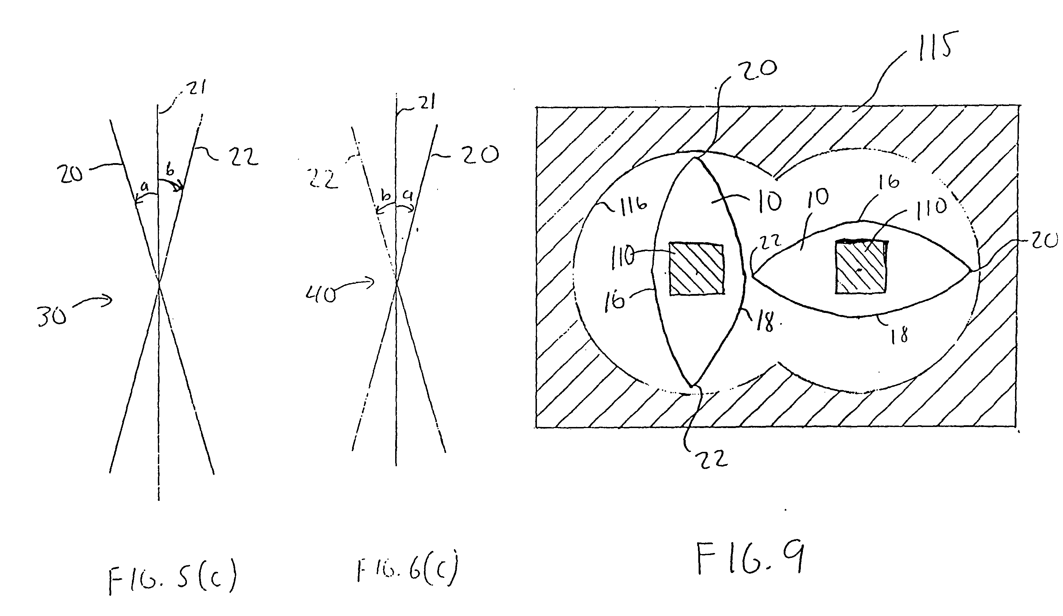

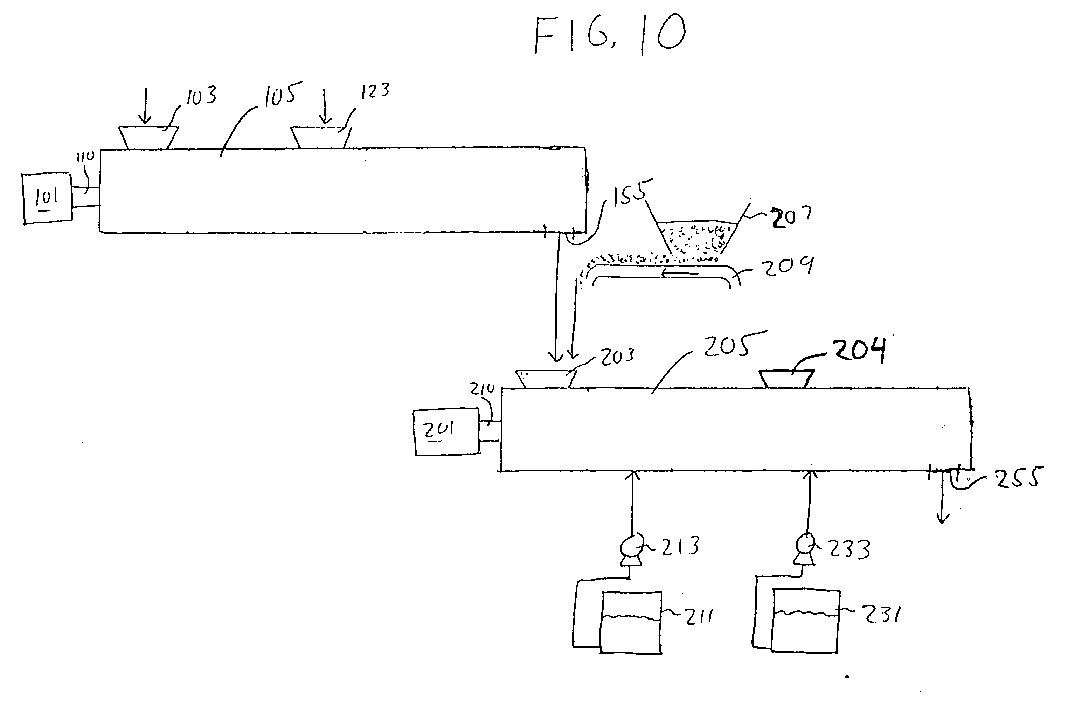

In a particularly useful embodiment, two or more paddle mixers may be used in series, in the manner illustrated in FIG. 10. The use of two mixers in series allows greater flexibility for feeding different gum base ingredients at different locations. A combination of elastomer, filler and resin can be continuously fed via feed port 103 to the feed barrel 105 of the first mixer. These materials are mixed in the first mixer, after which additional resin can be added to the first mixer via feed port 123. The combined ingredients are blended in the first mixer, and leave the first mixer at the exit 155, whereupon they are immediately fed into the barrel 205 of the second mixer via the feed port 203. Polyvinyl acetate can also be continuously fed to the barrel 205 from hopper 207, via feed conveyor 209 and feed port 203.

Further ingredients, such as waxes or oils, can be injected into the second mixer from feed tanks 211 and 231, via pumps 213 and 233. Optionally, a portion of ingredients can be added into a downstream feed port 204. After all the components are mixed, the gum base leaves the second mixer via exit 255. A wide variety of different feeding and mixing arrangements can also be employed using two or more paddle mixers in series, in order to achieve good dispersion of ingredients and a wide variety of gum base products.

The paddle mixer, which may be referred to as a compounder, has different characteristics than a typical extruder even though the same equipment may be used. The difference between an extruder and a compounder is the ratio of paddles or kneading elements to the conveying elements. Conveying elements and compression elements cause an extruder to build up pressure. Paddles or kneading elements do not build as much pressure in the extruder, thus there is more mixing with low pressure. If the extruder contains at least 40% kneading elements, then the pressure can be from one-fifth to one-tenth that of a typical extruder which uses more conveying and compression elements.

Nearly all extruders can be used as compounders. However, compounders which have a low L/D ratio of from 3:1 to 20:1 cannot generally be used as high pressure extruders. Also, compounders with this low L/D ratio have less effective shaft length and may require more paddle or kneading elements compared to conveying elements. For this type of compounder, mixing paddles should cover at least 50%, and preferably at least 60% of the shaft. Conversely, for an extruder having an L/D of from 20/1 to 40/1, only about 40% of the shaft needs to be covered with mixing paddles or kneading elements. For extruders with high L/D ratios greater than 40/1, only about 30% of the shaft may need to be covered with mixing paddles or kneading elements.

One of the key advantages to the preferred embodiment of the paddle mixer disclosed above is that the residence time is much higher than in typical extruders. Many extruders provide a residence time of less than 2 minutes or even less than 1 minute. However, in the preferred paddle mixer described above, a residence time of at least 10 minutes, and preferably at least 15 to 20 minutes, can be provided.

The method of the invention contemplates the making of any commercial chewing gum base product. Elastomers may constitute from 5 to 95 percent by weight of the gum base, preferably from 10 to 70 percent by weight and most preferably from 15 to 45 percent by weight. Elastomers may include synthetic elastomers such as polyisobutylene, isobutylene-isoprene copolymer, and styrene-butadiene copolymer; plastic polymers such as polyvinylacetate, vinyl acetate-vinyl laurate copolymer; or mixtures thereof. Natural elastomers may also include natural rubber such as smoked or liquid latex and guayule as well as natural gums such as jelutong, lechi caspi, perillo, massaranduba balata, massaranduba chocolate, nispero, rosindinha, chicle, gutta hang kang or mixtures thereof.

Elastomer plasticizers may constitute from 0 to 75 percent by weight of the gum base, preferably 5 to 45 percent by weight and most preferably 10 to 30 percent by weight. Elastomer plasticizers include natural rosin esters such as glycerol ester of partially hydrogenated rosin, glycerol ester of polymerized rosin, glycerol ester of partially dimerized rosin, glycerol ester of rosin, pentaerythritol esters of partially hydrogenated rosin, methyl and partially hydrogenated methyl esters of rosin, pentaerythritol ester of rosin or mixtures. Elastomer plasticizers also include synthetics such as terpene resins derived from alpha-pinene, beta-pinene and/or d-limonene.

Waxes include synthetic (e.g. polyethylene and Fischer-Tropsch waxes), natural (candelilla carnauba, beeswax, rice bran or mixtures thereof) and petroleum (e.g. microcrystalline and paraffin). Waxes, when used, generally constitute up to 30 weight percent of the gum base.

Softeners/emulsifiers include tallow, hydrogenated tallow, hydrogenated and partially hydrogenated vegetable oils, cocoa butter, glycerol monostearate, glycerol triacetate, lecithin, mono-, di- and triglycerides, acetylated glycerides and fatty acids (e.g. stearic, palmitic, oleic, linoleic and linolenic acids) or mixtures thereof Softeners/emulsifiers generally constitute from 0.5 to 40 weight percent of the gum base.

Fillers/texturizers include magnesium and calcium carbonate, ground limestone and silicate types such as magnesium and aluminum silicate, clay, alumina, talc as well as titanium oxide, mon-, di- and tricalcium phosphate, cellulose polymers such as ethyl, methyl and wood or mixtures thereof. Preferably, the filler comprises from 1 to 65 percent by weight of the gum base.

Colorants and whiteners include FD&C-type dyes and lakes, fruit and vegetable extracts, titanium dioxide or mixtures thereof.

A wide range of changes and modifications to the embodiments of the invention described above will be apparent to persons skilled in the art. The following examples are not to be construed as imposing limitations on the invention, but are included merely to illustrate preferred embodiments.

### Example 1

Using a 12.7 cm (5-inch) paddle diameter Teledyne Readco Continuous Mixer, having the mixer configuration illustrated in FIG. 7 and described above, chewing gum base was made as follows.

A mixture of ground isobutylene-isoprene copolymer (2 to 7 mm. particle size), calcium carbonate (<12 micron particle size), and terpene resin at a ratio of 8:21:17 was fed at a rate of 0.17 kg/min (0.383 lbs/min). at the first feed inlet. In the second feed inlet, 3 mixtures were added: 1) a powder blend of polyvinyl acetate, glycerol monostearate, and hydrogenated soybean and vegetable oils at a ratio of 24:5:13 fed at a rate of 0.16 kg/min (0.35 lbs/min)., 2) 6 parts molten polyisobutylene at 130°C, fed at a rate of 0.023 kg/min (0.05 lbs/min)., and 3) 6 parts of a 1:1 ratio of hydrogenated cottonseed oil and lecithin at 70°C fed at a rate of 0.023 kg/min (0.05 lbs/min).

Overall, the production rate for the gum base was 22.7 kg/hr (50 pounds per hour). The gum base was manufactured using an extruder rpm of 400, initial barrel temperatures of 132°C to 135°C (270 to 275°F), and a product exit temperature of about 128°C. The average residence time in the paddle mixer was about 30-40 minutes.

### Example 2

This example was performed using a 5.8cm (2-inch) paddle diameter Teledyne Readco Continuous Mixer and a 12.7cm (5-inch) paddle diameter Teledyne Readco Continuous Mixer in series, similar to the arrangement shown in FIG. 10, with the 5.8cm (2-inch) paddle diameter mixer being first. The mixers were configured with the objective of accomplishing dispersive mixing of rubber using the 5.8cm (2-inch) compounder, and distributive mixing of oil using the 12.7cm (5-inch) compounder. Specifically, the 5.8cm (2-inch) and 12.7cm (5-inch) compounders were configured as described in Tables 2 and 3.

The 5.8cm (2-inch) compounder included 10cm (4 inches) of conveying elements, and a balance of reverse helical and flat paddles, each 1.35cm (0.53 inch) long. Overall, twenty-five reverse helical and flat paddles (total) were used, for a total paddle length of 33.6cm (13.25 inches). The total active length of each of the shafts carrying the paddles was 43.8cm (17.25 inches). The 12.7cm (5-inch) compounder used paddles and conveying elements with the dimensions described above.

**Table 2:**

| Mixer Configuration (Per Shaft) For 2-Inch Teledyne Readco Mixer | | | | | |
|---|---|---|---|---|---|
| Longitudinal Position | Element | Rotational Position | Longitudinal Position | Element | Rotational Position |
| 1 | FC | 4 | 16 | FP | 2 |
| 2 | FC | 4 | 17 | FP | 4 |
| 3 | FC | 4 | 18 | FP | 4 |
| 4 | FC | 4 | 19 | FP | 4 |
| 5 | FP | 4 | 20 | FP | 2 |
| 6 | FP | 4 | 21 | FP | 2 |
| 7 | FP | 4 | 22 | FP | 2 |
| 8 | FP | 2 | 23 | FP | 3 |
| 9 | FP | 2 | 24 | FP | 4 |
| 10 | FP | 2 | 25 | FP | 1 |
| 11 | FP | 4 | 26 | FP | 2 |
| 12 | FP | 4 | 27 | FP | 4 |
| 13 | FP | 4 | 28 | FP | 4 |
| 14 | FP | 2 | 29 | RH | 2 |
| 15 | FP | 2 | | | |

**Table 3 :**

| Mixer Configuration (Per Shaft) For 5-Inch Teledyne Readco Mixer | | | | | |
|---|---|---|---|---|---|
| Longitudinal Position | Element | Rotational Position | Longitudinal Position | Element | Rotational Position |
| 1 | FC | 4 | 19 | FP | 2 |
| 2 | FC | 4 | 20 | FP | 2 |
| 3 | FC | 4 | 21 | FP | 4 |
| 4 | FC | 4 | 22 | FP | 4 |
| 5 | FC | 4 | 23 | FP | 4 |
| 6 | FC | 4 | 24 | FP | 2 |
| 7 | FC | 4 | 25 | FP | 2 |
| 8 | FC | 4 | 26 | FP | 2 |
| 9 | FP | 4 | 27 | FP | 4 |
| 10 | FP | 4 | 28 | FP | 4 |
| 11 | FP | 4 | 29 | FP | 4 |
| 12 | FP | 2 | 30 | FP | 1 |
| 13 | FP | 2 | 31 | FP | 2 |
| 14 | FP | 2 | 32 | FP | 3 |
| 15 | FP | 4 | 33 | FP | 4 |
| 16 | FP | 4 | 34 | FP | 2 |
| 17 | FP | 4 | 35 | FP | 2 |
| 18 | FP | 2 | 36 | RH | 4 |

The feed ports were arranged as follows:
- Feed Port No. 1 -: above longitudinal positions 1 - 4 on 5.8 cm (2-inch) mixer
- Feed Port No. 2 -: above longitudinal positions 1 - 4 on 12.7 cm (5-inch) mixer
- Feed Port No. 3 (oil injection) -: at longitudinal position 9 on 12.7 cm (5-inch) mixer

Using the above mixer arrangement, chewing gum base was made as follows.

A mixture of ground isobutylene-isoprene copolymer (2 to 7 mm particle size) and calcium carbonate at a ratio of 10:13 was fed at a rate of 0.087 kg/min (0.192 lbs/min). to feed port No. 1. Also added at feed port No. 1 was 16 parts polyisobutylene at 130°C at a rate of 3.4 kg/min (0.133 lbs/min). At feed port No. 2, 22 parts polyvinyl acetate and 29 parts of a powder blend of hydrogenated vegetable oil, glyorol monostearate, and hydrogenated soybean oil at a ratio of 13:3:13 were added at a rate of (0.425 lbs/min). Also added at feed port No. 2 was a liquid blend at 70°C of 5 parts hydrogenated cottonseed oil and 5 parts lecithin at a rate of (0.083 lbs/min). Feed port No. 3 was not used.

Overall, the production rate for the gum base was 50 pounds per hour. The gum base was manufactured using the following process conditions:

| | 5.8 cm (2-Inch) Mixer | 12.7 cm (5- Inch) Mixer |
|---|---|---|
| RPM | 314 | 450 |
| Initial Barrel Temp., | 129 to 132°C (265 to 270°F) | 107 to 110°C (225 to 230°F) |
| Product Exit Temp., °C | 164 | 133 |
| Average Residence Time | 2 to 6 min. | 30 to 40 min. |

About 27 kg (60 pounds) of gum base product was made at these conditions. The gum base had normal color, a smooth texture, and a homogeneous consistency, except for an occasional wood sliver resulting from a previous use of the equipment.

### Example 3

This example was performed using the same two-mixer arrangement described in Example 2. The 5.8cm (2-inch) and 12.7cm (5-inch) Teledyne Readco Continuous Mixers were configured as described in Tables 2 and 3, above. The feed ports were arranged as described in Example 2.

Using the above mixer arrangement, bubble gum base was made as follows.

A mixture of styrene-butadiene rubber, calcium carbonate (<12 micron particle size), and glycerol ester of wood rosin at a ratio of 9:46:18 was added at feed port No. 1 at a rate of 0.28 kg/min (0.608 lbs/min). At feed port No. 2, a mixture of glycerol ester of wood rosin, glycerol monostearate, and microcrystalline wax (m.p. = 82°C (180°F)) at a ratio of 20:1:6 was added at a rate of 0.08 (0.175 lbs/min). Feed port No. 3 was not used.

Overall, the production rate for the bubble gum base was 21.4 kg (47 pounds) per hour. The gum base was manufactured using the following process conditions:

| | 5.8 cm (2-Inch) Mixer | 12.7 cm (5-Inch) Mixer |
|---|---|---|
| RPM | 314 | 450 |
| Initial Barrel Temp., | not recorded | 107 to 110°C (225 to 230°F) |
| Product Exit Temp., °C | 140 | not recorded |
| Average Residence Time | 2 to 6 min. | 30 to 40 min. |

About 18kg (40 pounds) of bubble gum base was made at these conditions. The gum base had normal color, a smooth texture, and a homogeneous consistency.

### Example 4

This example was performed using a two-mixer arrangement described in Example 2, except for the following changes. Again, the 5.8cm (2-inch) Teledyne Readco Continuous Mixer was configured as described in Table 2 of Example 2. However, the 12.7cm (5-inch) Teledyne Readco Continuous Mixer was configured as described in Table 1 (Example 1) except that a reverse helical paddle was placed in position 19. The feed ports were arranged as follows:
- Feed Port No. 1 -: above longitudinal positions
1 - 4 on 5.8cm (2-inch) mixer
- Feed Port No. 2 -: above longitudinal positions
1 - 4 on 12.7cm (5-inch) mixer
- Feed Port No. 3 -: above longitudinal positions
20-23 on 12.7cm (5-inch) mixer

Using the above mixer arrangement, chewing gum base was made as follows.

A mixture of ground isobutylene-isoprene copolymer (2 to 7 mm particle size), calcium carbonate (<12 micron particle size), and terpene resin at a ratio of 8:21:17 was fed at a rate of 0.17 kg/min (0.383 lbs/min). at the first feed inlet. In the second feed inlet, a powder blend of polyvinyl acetate, glycerol monostearate, and hydrogenated soybean and vegetable oil at a ratio of 24:5:13 were fed at a rate of 0.16 kg/min (0.35 lbs/min). In the third feed port, 6 parts of polyisobutylene at 130°C at a feed rate of 0.02 kg/min (0.05 lbs/min). and 6 parts of a 50/50 mixture of hydrogenated cottonseed oil/lecithin at 70°C at a feed rate of 0.02 kg/min (0.05 lbs/min) were added.

Overall, the production rate for the gum base was 22.7 kg (50 pounds) per hour. The gum base was manufactured using the following process conditions:

| | 5.8 cm (2-Inch) Mixer | 12.7 cm (5-Inch) Mixer |
|---|---|---|
| RPM | 310 | 387 |
| Initial Barrel Temp., | 135 to 138°C (275 to 280°F) | 113 to 116°C (235 to 240°F). |
| Product Exit Temp., °C | 162 | 120 |
| Average Residence Time | 2 to 6 min. | 30 to 40 min. |

About 18 kg (40 pounds) of gum base product was made at these conditions. The gum base had normal color, a smooth texture, and a homogeneous consistency, except for an occasional isolated undispersed particle.

Based on these and other runs, it was concluded that paddle mixing is an effective technique for manufacturing gum base on a continuous basis. The optimum process conditions, and the use of one or two mixers, vary depending on the specific gum base composition and the desired output rate.

### Example 5

Gum base was made on a continuous basis using a Japan Steel Works Incorporated model TEX30HSS32.5PW-2V twin screw extruder set up in a co-rotating mode with extremely aggressive kneading elements and two feed inlets.

"Extremely aggressive kneading elements" means that most of the extruder shafts were covered with kneading elements as paddles. The arrangement was: 1/6 conveying elements at the first feed inlet, 1/3 kneading elements, then 1/6 conveying elements at the second feed inlet and 1/3 kneading elements. This results in paddles covering 67% of the shafts.

A mixture of ground styrene - butadiene rubber (2 to 7 mm particle size), calcium carbonate (<12 micron particle size) and resin ester of glycerol abietate at a ratio of 9:46:18 was fed at a rate of 5.4 kg/hr at the first feed inlet. A mixture of resin ester of glycerol abietate, glycerol monostearate and microcrystalline wax at a ratio of 20:1:6 was fed at a rate of 2 kg/hr at the second feed inlet. The extruder was operated with temperature controls for seven heating zones and the die. The set point and actual temperatures were as follows:

| Zone | 1 | 2 | 3 | 4 | 5 | 6 | 7 | Die |
|---|---|---|---|---|---|---|---|---|
| Set Temperature | 130°C | 130°C | 130°C | 130°C | 100°C | 100°C | 100°C | 80°C |
| Actual Temperature | 129°C | 131°C | 122°C | 130°C | 100°C | 100°C | 100°C | 139°C |

The first feed inlet was between zones 1 and 2 and the second feed inlet was between zones 3 and 4. The extrudate exited at 118°C. The machine was run at 200 rpm, drawing 21 amps. The extrudate was a finished gum base that had no lumps.

### Example 6

This example was performed using a two-mixer arrangement with two 12.7cm (5-inch) Teledyne Readco Continuous Mixer Compounders. The first Compounder was configured the same as in Table 3 of Example 2 the second Compounder was configured based on Table 1, shown previously. This configuration is also shown in Figure 7.

The feed ports were arranged as follows:
- Feed Port No. 1 -: above longitudinal positions
1 - 4 on first 12.7 cm (5-inch) mixer
- Feed Port No. 2 -: above longitudinal positions
1 - 4 on second 12.7 cm (5-inch) mixer
- Feed Port No. 3 -: above longitudinal positions
20-23 on second 12.7 cm (5-inch) mixer.

Using the above mixer arrangement, chewing gum base was made as follows:

A mixture of ground isobutylene-isoprene copolymer (2-7 mm particle size), calcium carbonate (<12 micron particle size), terpene resin, and powder color at a ratio of 11:18:17:1 was fed at a rate of 0.65 kg/min (1.435 lbs/min). in the first feed inlet. In the second feed inlet, a powder blend of polyvinyl acetate, glycerol monostearate, and hydrogenated soybean and vegetable oil at a ratio of 24:5:12 was fed at a rate of 0.57 kg/min (1.264 lbs/min). In the third feed port, 6 parts of polyisobutylene at 95°C at a feed rate of 0.08 kg/min (0.181 lbs/min). and 6 parts of a 50/50 mixture of hydrogenated cottonseed oil/lecithin at 80°C at a feed rate of 0.09 kg/min (0.203 lbs/min). were added.

Overall, the production rate for the gum base was about 84 kg (185 pounds) per hour. The gum base was manufactured using the following process conditions:

| | First 12.7cm (5-Inch) Mixer | Second 12.7cm (5-Inch) Mixer |
|---|---|---|
| RPM | 250 | 400 |
| Initial Barrel Temp., °C | 135 | 115 |
| Product Exit Temp., °C | 190 | 115 |
| Average Residence Time | 20 min. | 10 min. |

About 9 kg (200 pounds) of gum base product was made. The gum base had normal color, no lumps, no unincorporate oil, but had a burnt off taste and odor.

### Example 7

This example was performed using a 2 mixer arrangement with two 12.7cm (5-inch) Teledyne Readco Continuous Mixer Compounders. Both compounders were configured with the same paddle configuration that was shown in Table 1. Four feed ports were arranged as follows:
- Feed Port No. 1 -: above longitudinal positions
1 - 4 on first 12.7cm (5-inch mixer)
- Feed Port No. 2 -: above longitudinal positions
20 - 23 on first 12.7 cm (5-inch mixer)
- Feed Port No. 3 -: above longitudinal positions
1 - 4 on second 12.7 cm (5-inch mixer)
- Feed Port No. 4 -: above longitudinal positions
20-23 on second 12.7 cm (5-inch mixer).

Using the above mixer arrangement, chewing gum base was made as follows:

A mixture of ground isobutylene-isoprene copolymer (2 to 7 mm particle size), calcium carbonate (<12 micron particle size), and polyvinyl acetate at a ratio of 13:10:7 was fed at a rate of 0.34 kg/min (0.75 lbs/min). in the first feed inlet. In the second feed inlet, 15 parts of polyvinyl acetate was added at 0.17 kg/min (0.375 lbs/min). In the third feed port, hydrogenated vegetable oil, hydrogenated soybean oil, and glycerol monostearate at a ratio of 13:13:3 were added at a rate of 0.33 kg/min (0.725 lbs/min). In the fourth feed port, 10 parts of partially hydrogenated vegetable oil at 0.11 kg/min (0.25 lbs/min)., and 16 parts of polyisobutylene at 130°C at a rate of 0.18 kg/min (0.40 lbs/min). were added.

Overall, the production rate for the gum base was 68 kg (150 pounds) per hour. The gum base was manufactured using the following process conditions:

| | First 12.7cm (5-Inch) Mixer | Second 12.7cm (5-Inch) Mixer |
|---|---|---|
| RPM | 373 | 374 |
| Initial Barrel Temp., °C | 150 to 180 | 110 |
| Product Exit Temp., °C | 165 to 191 | 111 |
| Average Residence Time | 20 to 25 min. | 12 to 15 min. |

About 182 kg (400 pounds) of gum base product was made. The gum base had normal color, no lumps, no unincorporated oil, and clean taste and odor.

### Example 8

This example was made using the same equipment, mixer arrangement, screw configuration, and feed ports as Example 7, except feed port No. 2 was closed off. The gum base was made as follows:

A mixture of ground isobutylene-isoprene copolymer (2 to 7 mm particle size), calcium carbonate (<12 micron particle size), terpene resin, and polyvinyl acetate at a ratio of 11:18:17:6 was fed at a rate of 0.6 kg/min (1.30 lbs/min). in the first feed inlet. In the third feed inlet, a powder blend of polyvinyl acetate, glycerol monostearate, hydrogenated soybean oil and vegetable oil, and powdered color at a ratio of 18:5:12:1 was fed at a rate of 0.41 kg/min (0.90 lbs/min). In the fourth feed inlet, 6 parts of polyisobutylene at 130°C was added at a rate of 0.07 kg/min (0.15 lbs/min)., and 6 parts at a 50/50 blend of lecithin and hydrogenated cottonseed oil at 90°C was added at a rate of 0.07 kg (0.15 lbs/min).

Overall, the production rate for the gum base was 150 pounds per hour. The gum base was manufactured using the following process conditions.

| | First 12.7cm (5-Inch) Mixer | Second 12.7cm (5-Inch) Mixer |
|---|---|---|
| RPM | 300 | 373 |
| Initial Barrel Temp., °C | 150 to 180 | 110 |
| Product Exit Temp., °C | 172 | 113 |
| Average Residence Time | 20 to 25 min. | 12 to 15 min. |

About 182 kg (400 pounds) of gum base product was made. The gum base had normal color, no lumps, no unincorporated oil, and clean taste and odor.

Gum bases of Examples 7 and 8 were analyized by Gel Permeation chromatography (GPC) and compared to the same formulation of base made by conventional batch processes. Analyses showed that the isobutylene-isoprene copolymer of Examples 7 and 8 was over-sheared and degraded. Sugar gum formulations were made to compare sensory attributes of bases from Examples 7 and 8 to base made by the conventional batch process. Tests showed that bases of Examples 7 and 8 gave a much softer texture than the bases from conventional batch process.

### Example 9

This example was performed using a two-mixer arrangement with two 12.7cm (5-inch) Teledyne Readco Continuous Mixer Compounders. Both compounders were configured according to the following Table 4. The feed ports were the same as Example 8.

**Table 4:**

| Mixer Configuration (Per Shaft) | | | | | |
|---|---|---|---|---|---|
| Longitudinal Position | Element | Rotational Position | Longitudinal Position | Element | Rotational Position |
| 1 | FC | 4 | 19 | FP | 3 |
| 2 | FC | 4 | 20 | FC | 3 |
| 3 | FC | 4 | 21 | FC | 3 |
| 4 | FC | 4 | 22 | FC | 3 |
| 5 | FC | 4 | 23 | FC | 3 |
| 6 | FC | 4 | 24 | FC | 3 |
| 7 | FC | 4 | 25 | FC | 3 |
| 8 | FC | 4 | 26 | FC | 3 |
| 9 | FP | 4 | 27 | FC | 3 |
| 10 | FP | 4 | 28 | FP | 2 |
| 11 | FP | 4 | 29 | FP | 2 |
| 12 | FP | 2 | 30 | FP | 4 |
| 13 | FP | 2 | 31 | FP | 4 |
| 14 | FP | 2 | 32 | FP | 4 |
| 15 | FP | 4 | 33 | FP | 2 |
| 16 | FP | 4 | 34 | FP | 2 |
| 17 | FP | 1 | 35 | FP | 4 |
| 18 | FP | 2 | 36 | RH | 4 |

Using the above mixer arrangement, chewing gum base was made as follows.

A mixture of ground isobutylene-isoprene copolymer (2 to 7 mm particle size), and calcium carbonate, terpene resins, and polyvinyl acetate at a ratio of 11:18:17:1 was added at a rate of 0.53 kg/min (1.175 lbs/min). to feed inlet No. 1. To feed inlet No. 3 a powder blend of polyvinyl acetate, glycerol monostearate, hydrogenated soybean and vegetable oils, and powdered color at a ratio of 23:5:12:1 was fed at a rate of 0.47 kg/min (1.025 lbs/min). To feed inlet No. 4, 6 parts of polyisobutylene at 130°C was added at a rate of 0.07 kg/min (0.15 lbs/min)., and 6 parts of a 50/50 blend of lecithin and hydrogenated cottonseed oil at 90°C was added at a rate of 0.87 kg/min (0.15 lbs/min).

Overall, the production rate for the gum base was 68 kg (150 pounds) per hour. The gum base was manufactured using the following process conditions:

| | First 12.7cm (5-Inch) Mixer | Second 12.7cm (5-Inch) Mixer |
|---|---|---|
| RPM | 250 | 376 |
| Initial Barrel Temp., °C | 150 to 180 | 110 |
| Product Exit Temp., °C | 175 | 120 |
| Average Residence Time | 15 to 20 min. | 12 to 15 min. |

About 159 kg (350 pounds) of gum base was made. The gum base had normal color, no lumps, no unincorporated oil, and clean taste and odor. Analysis of the gum base by GPC indicated it is very similar to the same base formula made by a conventional batch process. Also, gum made from base of this example had sensory properties virtually the same as gum made with base made by conventional batch process.

## Claims

1. A continuous method of making chewing gum base, comprising the steps of:
providing a mixer which includes a plurality of kneading elements and conveying elements arranged on one or more shafts, the kneading elements covering at least 30% of one or more shafts for mixers with an L/D ratio greater than 40/1 and at least 40% of one or more shafts for other mixers;
continuously feeding gum base ingredients comprising from 5 to 95 wt% elastomer, from 0 to 75 wt% elastomer plasticizer, from 0.5 to 40 wt% softeners/emulsifiers, and from 1 to 65 wt% fillers/texturizers to the mixer; and
continuously blending the ingredients using the kneading elements until a homogeneous gum base is obtained;
wherein the kneading elements comprise mixer paddles which mix the gum ingredients without facilitating significant forward conveyance of the gum ingredients through the mixer.

2. A method as claimed in claim 1 wherein the mixer paddles cover at least 60 percent of the one or more shafts.

3. A method as claimed in claim 1 or 2 wherein the kneading elements are arranged on two parallel rotating shafts in the mixer.

4. A method as claimed in claim 3 wherein the two shafts rotate on the same direction during mixing.

5. A method as claimed in claim 3 wherein the shafts co-rotate.

6. A method as claimed in any one of claims 1 to 5 wherein the mixer paddles are selectively arranged at different relative rotational positions on the shafts.

7. A method as claimed in any one of claims 1 to 6 wherein each mixing paddle comprises two convex mixing surfaces.

8. A method as claimed in any one of claims 1 to 7 wherein a major portion of the kneading elements are flat paddles.

9. A method as claimed in any one of claims 1 to 8 wherein a minor portion of the kneading elements are helical paddles.

10. A method as claimed in any one of claims 3 to 9 further comprising a plurality of feed conveying elements arranged and mounted on the parallel shafts.

11. A method as claimed in any one of claims 1 to 10 wherein the mixer comprises a barrel, the barrel including an inner surface defining a barrel space, the shafts and kneading elements being located in the barrel space.

12. A method as claimed in claim 11 wherein the inner surface has a shape of two intersecting cylinders.

13. A method as claimed in any one of claims 1 to 12 wherein the mixing paddles have a height, a width, and a ratio of height to width of more than 1.5 to 1.

14. A method as claimed in claim 13 wherein the ratio of height to width is more than 2 to 1.

15. A method as claimed in any one of claims 1 to 14 wherein the mixer has a length and a maximum mixer paddle diameter, the ratio of mixer length to maximum paddle diameter being at least 4:1.

16. A method as claimed in claim 15 wherein the ratio of mixer length to maximum mixer paddle diameter is at least 7:1.

17. A method as claimed in any one of claims 1 to 16 wherein the elastomer, elastomer plasticizer, softener/emulsifier and filler are selectively fed to the mixer at two or more locations along the length of the mixer.

18. A method as claimed in claim 17 wherein at least some of the elastomer and filler are selectively fed at a first of the locations.

19. A method as claimed in claim 18 wherein at least sone of the softener/emulsifier is selectively fed at a location downstream of the first location.

20. A method as claimed in any one of claims 17 to 19 wherein the elastomer, elastomer plasticizer, softener/emulsifier and filler are selectively fed at three or more locations.

21. A method as claimed in any one of claims 1 to 20 wherein the elastomer comprises a synthetic material selected from the group consisting of polyisobutylene, isobutylene-isoprene copolymer, styrene-butadiene copolymer, polyvinyl acetate, vinyl acetate-vinyl laurate copolymer, and combinations thereof.

22. A method as claimed in any one of claims 1 to 21 wherein the elastomer comprises a natural material selected from the group consisting of latex, guayule, natural gums, and combinations thereof.

23. A method as claimed in any one of claims 1 to 22 wherein the elastomer plasticizer comprises a material selected from the group consisting of natural rosin esters and synthetic terpene resins.

24. A method as claimed in any one of claims 1 to 23 wherein the softeners/emulsifiers comprise material selected from the group consisting of tallow, hydrogenated tallow, hydrogenated and partially hydrogenated vegetable oils, cocoa butter, glycerol monostearate, glycerol triacetate, lecithin, glycerides, fatty acids, and combinations thereof.

25. A method as claimed in any one of claims 1 to 24 wherein the fillers/texturizers comprise material selected from the group consisting of carbonates, limestone, silicates, clay, alumina, talc, titanium oxide, phosphates of calcium, cellulose materials, and combinations-thereof.

26. A method as claimed in any one of claims 1 to 25 wherein the mixer comprises only one paddle mixer apparatus.

27. A method as claimed in any one of claims 1 to 25 wherein the mixer comprises at least two paddle mixer apparatus in series.

28. A chewing gum base paddle mixer for use in continuously manufacturing chewing gum base from ingredients comprising elastomer, elastomer plasticizer, softener/emulsifier and filler;
the mixer comprising a plurality of kneading elements and conveying elements arranged and supported on one or more shafts, the kneading elements comprising mixing paddles, the mixing paddles covering at least 30% of the shafts for mixers with an L/D ratio greater than 40/1 and at least 40% of one or more shafts for other mixers and being adapted such that the mixing paddles mix the gum base ingredients without facilitating significant forward conveyance of the ingredients through the mixer, and at least one of the conveying elements being arranged to convey the gum base ingredients forward through the mixer;
the arrangement of the mixer paddles and other kneading elements being such that the mixer continuously manufactures gum base from the ingredients without any of one or more of the ingredients having to have been homogeneously mixed with any one or more of the other ingredients before being fed into the mixer.

29. A mixer as claimed in claim 28 wherein the mixer paddles cover at least 40 percent of the one or more shafts.

30. A mixer as claimed in claim 28 wherein the mixer paddles cover at least 60 percent of the one or more shafts.

31. A mixer as claimed in any one of claims 28 to 30 wherein the kneading elements are arranged on two parallel rotating shafts in the mixer.

32. A mixer as claimed in claim 31 wherein the two shafts rotate on the same direction during mixing.

33. A mixer as claimed in of claim 31 wherein the shafts co-rotate.

34. A mixer as claimed in any one of claims 29 to 33 wherein the mixer paddles are selectively arranged at different relative rotational positions on the shafts.

35. A mixer as claimed in any one of claims 28 to 34 wherein each mixing paddle comprises two convex mixing surfaces.

36. A mixer as claimed in any one of claims 28 to 35 wherein a major portion of the kneading elements are flat paddles.

37. A mixer as claimed in any one of claims 28 to 36 wherein a minor portion of the kneading elements are helical paddles.

38. A mixer as claimed in any one of claims 28 to 37 wherein the mixing paddles have a height, a width, and a ratio of height to width of more than 1.5 to 1.

39. A mixer as claimed in claim 38 wherein the ratio of height to width is more than 2 to 1.

40. A mixer as claimed in any one of claims 28 to 39 wherein the mixer has a length and a maximum mixer paddle diameter, the ratio of mixer length to maximum paddle diameter being at least 4:1.

41. A mixer as claimed in claim 40 wherein the ratio of mixer length to maximum mixer paddle diameter is at least 7:1.

## Patentansprüche

1. Kontinuierliches Verfahren zum Herstellen einer Kaugummigrundmasse, wobei das Verfahren die Schritte umfasst:
Bereitstellen eines Mischers, der mehrere Knetelemente und Transportelemente aufweist, die an einem oder mehreren Schäften angeordnet sind, wobei die Knetelemente mindestens 30% eines oder mehrerer Schäfte abdecken für Mischer mit einem L/D-Verhältnis, das größer als 40/1 ist, und die mindestens 40% eines oder mehrerer Schäfte für andere Mischer abdecken;
kontinuierliches Zuführen von Ingredienzien für eine Gummigrundmasse mit 5 bis 95 Gewichtsprozent Elastomermaterial, 0 bis 75 Gewichtsprozent elastomeren Plastizierermaterial, ungefähr 0.5 bis 40 Gewichtsprozent Weichmacher/Emulsionsstoffe und 1 bis 65 Gewichtsprozent Füllstoffe/Texturierstoffe zu dem Mischer; und
kontinuierliches Mischen der Ingredienzien unter Anwendung der Knetelemente, bis eine homogene Gummigrundmasse erhalten wird;
wobei die Knetelemente Mischerschaufeln aufweisen, die die Gummiingredienzien mischen ohne einen signifikanten Vorwärtstransport der Gummiingredienzien durch den Mischer zu bewirken.

2. Verfahren nach Anspruch 1, wobei die Mischerschaufeln mindestens 60% des einen oder der mehreren Schäfte bedecken.

3. Verfahren nach Anspruch 1 oder 2, wobei die Knetelemente an zwei parallel drehenden Schäften in dem Mischer angeordnet sind.

4. Verfahren nach Anspruch 3, wobei die beiden Schäften sich während des Mischens in der gleichen Richtung drehen.

5. Verfahren nach Anspruch 3, wobei die Schäfte sich gemeinsam drehen.

6. Verfahren nach einem der Ansprüche 1 bis 5, wobei die Mischerschaufeln selektiv an unterschiedlichen relativen Drehpositionen an den Schäften angeordnet sind.

7. Verfahren nach einem der Ansprüche 1 bis 6, wobei jede Mischerschaufel zwei konvexe Mischeroberflächen aufweist.

8. Verfahren nach einem der Ansprüche 1 bis 7, wobei ein überwiegender Anteil der Knetelemente flache Schaufeln sind.

9. Verfahren nach einem der Ansprüche 1 bis 8, wobei ein kleinerer Anteil der Knetelemente gewundene Schaufeln sind.

10. Verfahren nach einem der Ansprüche 3 bis 9, wobei ferner mehrere Zufuhrtransportelemente vorgesehen sind und an den parallelen Schäften angeordnet und montiert sind.

11. Verfahren nach einem der Ansprüche 1 bis 10, wobei der M ischer einen Behälter aufweist, wobei der Behälter eine innere Oberfläche, die einen Behälterinnenraum definiert, aufweist, und wobei die Schäfte und die Knetelemente in dem Behälterinnenraum angeordnet sind.

12. Verfahren nach Anspruch 11, wobei die Innenoberfläche die Form zweier sich schneidender Zylinder besitzt.

13. Verfahren nach einem der Ansprüche 1 bis 12, wobei die Mischerschaufeln eine Höhe und eine Breite besitzen, und wobei ein Verhältnis der Höhe zu Breite größer als 1.5 zu 1 ist.

14. Verfahren nach Anspruch 13, wobei das Verhältnis von Höhe zu Breite größer als 2 zu 1 ist.

15. Verfahren nach einem der Ansprüche 1 bis 14, wobei der Mischer eine Länge und einen maximalen Mischerschaufeldurchmesser besitzt, wobei das Verhältnis von Mischerlänge zu maximalem Schaufeldurchmesser mindestens 4:1 beträgt.

16. Verfahren nach Anspruch 15, wobei das Verhältnis der Mischerlänge zu maximalen Mischerschaufeldurchmesser mindestens 7:1 beträgt.

17. Verfahren nach einem der Ansprüche 1 bis 16, wobei das Elastomermaterial, der Elastomerplastizierer, der Weichmacher/Emulsionsstoff und das Füllmaterial selektiv dem Mischer an zwei oder mehreren Positionen entlang der Länge des Mischers zugeführt werden.

18. Verfahren nach Anspruch 17, wobei zumindest ein gewisser Anteil des Elastomers und des Füllmaterials selektiv an einer ersten Position der zwei oder mehreren Positionen zugeführt wird.

19. Verfahren nach Anspruch 18, wobei zumindest ein gewisser Anteil des Weichmachers/Emulsionsstoffes selektiv an einer Stelle in Prozessrichtung hinter der ersten Position zugeführt wird.

20. Verfahren nach einem der Ansprüche 17 bis 19, wobei das Elastomermaterial, der Elastomerplastizierer, der Weichmacher/Emulsionsstoff und das Füllmaterial selektiv an drei oder mehreren Positionen zugeführt werden.

21. Verfahren nach einem der Ansprüche 1 bis 20, wobei das Elstomermaterial ein synthetisches Material aufweist, das ausgewählt wird aus der Gruppe: Polyisobutylen, Isobutylen-Isopren-Copolymer, Styren-Butadien-Copolymer, Polyvinylacetat, Vinylacetat-Vinyllauratcopolymer und Kombinationen davon.

22. Verfahren nach einem der Ansprüche 1 bis 21, wobei das Elastomermaterial ein natürliches Material aufweist, das ausgewählt wird aus: Latex, Guayul, natürlicher Gummi und Kombinationen davon.

23. Verfahren nach einem der Ansprüche 1 bis 22, wobei der Elastomerplastizierer ein Material aufweist, das ausgewählt wird aus: natürlichen Harzestern und synthetischen Terpenharzen.

24. Verfahren nach einem der Ansprüche 1 bis 23, wobei der Weichmacher/Emulsionsstoff ein Material aufweist, das ausgewählt wird aus: Talg, hydriertem Talg, hydrierten und teilweise hydrierten pflanzlichen Ölen, Kakaobutter, Glyzerinmonostearat, Glyzerintriazetat, Lecithin, Glyzerieden, Fettsäuren und Kombinationen davon.

25. Verfahren nach einem der Ansprüche 1 bis 24, wobei die Füllstoffe/Texturstoffe ein Material aufweisen, das ausgewählt wird aus: Karbonaten, Kalkstein, Silikaten, Ton, Tonerde, Talk, Titanoxid, Phosphate des Kalziums, Zellufosematerialien und Kombinationen davon.

26. Verfahren nach einem der Ansprüche 1 bis 26, wobei der Mischer nur eine Schaufelmischervorrichtung aufweist.

27. Verfahren nach einem der Ansprüche 1 bis 25, wobei der Mischer mindestens zwei Schaufelmischervorrichtungen in Reihe aufweist.

28. Schaufelmischer für Kaugummigrundmasse zur Verwendung in einem kontinuierlichen Herstellungsprozess für Kaugummigrundmasse aus Ingredienzien, die Elastomermaterialien, Elastomerplastizier, Weichmacher/Emulsionsstoffe und Füllmaterialien aufweisen;
wobei der Mischer mehrere Knetelemente und Transportelemente aufweist, die an einem oder mehreren Schäften angeordnet und gehalten werden, wobei die Knetelemente Mischerschaufeln enthalten, wobei die Mischerschaufeln m indestens 30% der Schäfte abdecken für Mischer mit einem UD-Verhältnis von größer als 40/1 und mindestens 40% eines oder mehrerer Schäfte für andere Mischer abdecken und so ausgebildet sind, dass die Mischerschaufeln die Gummigrundmasseningredienzien mischen, ohne einen signifikanten Vorwärtstransport der Ingredienzien durch den Mischer zu bewirken, und wobei mindestens eines der Transportelemente angeordnet ist, um die Ingredienzien der Gummigrundmasse vorwärts durch den Mischer zu transportieren;
wobei die Anordnung der Mischerschaufeln und anderer Knetelemente so ist, dass der Mischer kontinuierlich Gummigrundmasse aus den Ingredienzien herstellt, ohne dass eine oder mehrere der Ingredienzien mit einer oder mehreren der anderen Ingredienzien homogen gemischt werden müssen, bevor diese dem Mischer zugeführt werden.

29. Mischer nach Anspruch 28, wobei die Mischerschaufeln mindestens 40% des einen oder der mehreren Schäfte bedecken.

30. Mischer nach Anspruch 28, wobei die Mischerschaufeln mindestens 60% des einen oder der mehreren Schäfte bedecken.

31. Mischer nach einem der Ansprüche 28 bis 30, wobei die Knetelemente an zwei parallel drehenden Schäften in dem Mischer angeordnet sind.

32. Mischer nach Anspruch 31, wobei die zwei Schäfte sich während des Mischens in der gleichen Richtung drehen.

33. Mischer nach Anspruch 31, wobei die Schäfte sich gemeinsam drehen.

34. Mischer nach einem der Ansprüche 29 bis 33, wobei die Mischerschaufeln selektiv an unterschiedlichen relativen Drehpositionen an den Schäften angeordnet sind.

35. Mischer nach einem der Ansprüche 28 bis 34, wobei jede Mischerschaufel zwei konvexe Mischoberflächen aufweist.

36. Mischer nach einem der Ansprüche 28 bis 35, wobei ein größerer Teil der Knetelemente flache Schaufeln sind.

37. Mischer nach einem der Ansprüche 28 bis 36, wobei ein kleinerer Anteil der Knetelemente gewundene Schaufeln sind.

38. Mischer nach einem der Ansprüche 28 bis 37, wobei die Mischerschaufeln eine Höhe und eine Breite aufweisen und wobei ein Verhältnis von Höhe zu Breite größer als 1.5 zu 1 ist.

39. Mischer nach Anspruch 38, wobei das Verhältnis von Höhe zu Breite größer als 3 zu 1 ist.

40. Mischer nach einem der Ansprüche 28 bis 39, wobei der Mischer eine Länge und einen maximalen Mischerschaufeldurchmesser besitzt, wobei das Verhältnis von Mischerlänge zu maximalem Schaufeldurchmesser mindestens 4:1 beträgt.

41. Mischer nach Anspruch 40, wobei der Verhältnis von Mischerlänge zu maximalem Mischerschaufeldurchmesser mindestens 7:1 beträgt.

## Revendications

1. Procédé continu pour la préparation d'une base de gomme à mâcher, comprenant les étapes consistant :
à prendre un mélangeur qui comprend une pluralité d'éléments de malaxage et d'éléments de transport placés sur un ou plusieurs arbres, les éléments de malaxage couvrant au moins 30% d'un ou plusieurs arbres pour des mélangeurs ayant un rapport L/D supérieur à 40/1, et au moins 40% d'un ou plusieurs arbres pour les autres mélangeurs ;
à introduire de manière continue les ingrédients de base de gomme comprenant 5 à 95% en poids d'un élastomère, 0 à 75% en poids d'un plastifiant d'élastomère, 0,5 à 40% en poids d'agents ramollissants/émulsionnants et 1 à 65% en poids de charges/agents texturants dans le mélangeur ; et
à mélanger de manière continue les ingrédients en utilisant les éléments de malaxage jusqu'à obtention d'une base de gomme homogène ;
dans lequel les éléments de malaxage comprennent des pales de mélangeur qui mélangent les ingrédients de la gomme sans faciliter un transport significatif vers l'avant des ingrédients de la gomme à travers le mélangeur.

2. Procédé suivant la revendication 1, dans lequel les pales du mélangeur couvrent au moins 60% du ou des arbres.

3. Procédé suivant la revendication 1 ou 2, dans lequel les éléments de malaxage sont placés sur deux arbres rotatifs parallèles dans le mélangeur.

4. Procédé suivant la revendication 3, dans lequel les deux arbres tournent dans le même sens au cours du mélange.

5. Procédé suivant la revendication 3, dans lequel les arbres sont corotatifs.

6. Procédé suivant l'une quelconque des revendications 1 à 5, dans lequel les pales du mélangeur sont placées sélectivement à des positions de rotation relatives différentes sur les arbres.

7. Procédé suivant l'une quelconque des revendications 1 à 6, dans lequel chaque pale de mélange comprend deux surfaces de mélange convexes.

8. Procédé suivant l'une quelconque des revendications 1 à 7, dans lequel une proportion dominante des éléments de malaxage est constituée de pales plates.

9. Procédé suivant l'une quelconque des revendications 1 à 8, dans lequel une proportion secondaire des éléments de malaxage est constituée de pales hélicoïdales.

10. Procédé suivant l'une quelconque des revendications 3 à 9, comprenant en outre une pluralité d'éléments de transport d'alimentation placés et montés sur les arbres parallèles.

11. Procédé suivant l'une quelconque des revendications 1 à 10, dans lequel le mélangeur comprend un cylindre, le cylindre comprenant une surface intérieure définissant un espace de cylindre, les arbres et les éléments de malaxage étant situés dans l'espace de cylindre.

12. Procédé suivant la revendication 11, dans lequel la surface intérieure a une ferme de deux cylindres à intersection.

13. Procédé suivant l'une quelconque des revendications 1 à 12, dans lequel les pales de mélange ont une hauteur, une largeur, et un rapport de la hauteur à la largeur supérieur à 1,5:1.

14. Procédé suivant la revendication 13, dans lequel le rapport de la hauteur à la largeur est supérieur à 2:1.

15. Procédé suivant l'une quelconque des revendications 1 à 14, dans lequel le mélangeur a une longueur et un diamètre maximal des pales du mélangeur, le rapport de la longueur du mélangeur au diamètre maximal des pales étant égal à au moins 4;1.

16. Procédé suivant la revendication 15, dans lequel le rapport de la longueur du mélangeur au diamètre maximal des pales du mélangeur est égal à au moins 7:1.

17. Procédé suivant l'une quelconque des revendications 1 à 16, dans lequel l'élastomère, le plastifiant d'élastomère, l'agent ramollissant/émulsionnant et la charge sont introduits sélectivement dans le mélangeur à deux ou plus de deux emplacements le long du mélangeur.

18. Procédé suivant la revendication 17, dans lequel au moins une partie de l'élastomère et de la charge est introduite sélectivement à un premier des emplacements.

19. Procédé suivant la revendication 18, dans lequel au moins une partie de l'agent ramollissant/émulsionnant est introduite sélectivement à un emplacement en aval du premier emplacement.

20. Procédé suivant l'une quelconque des revendications 17 à 19, dans lequel l'élastomère, le plastifiant d'élastomère, l'agent ramollissant/émulsionnant et la charge sont introduits sélectivement à trois ou plus de trois emplacements.

21. Procédé suivant l'une quelconque des revendications 1 à 20, dans lequel l'élastomère comprend une matière synthétique choisie dans le groupe consistant en polyisobutylène, copolymère isobutylène-isoprène, copolymère styrène-butadiène, poly(acétate de vinyle), copolymère acétate de vinyle-laurate de vinyle et leurs associations.

22. Procédé suivant l'une quelconque des revendications 1 à 21, dans lequel l'élastomère comprend une matière naturelle choisie dans le groupe consistant en latex, guayule, gomme naturelle et leurs associations.

23. Procédé suivant l'une quelconque des revendications 1 à 22, dans lequel le plastifiant d'élastomère comprend une matière choisie dans le groupe consistant en des esters de colophane naturelle et des résines terpéniques synthétiques.

24. Procédé suivant l'une quelconque des revendications 1 à 23, dans lequel les agents ramollissants/émulsionnants comprennent une matière choisie dans le groupe consistant en le suif, le suif hydrogéné, des huiles végétales hydrogénées et partiellement hydrogénées, le beurre de cacao, le monostéarate de glycérol, le triacétate de glycérol, la lécithine, des glycérides, des acides gras et leurs associations.

25. Procédé suivant l'une quelconque des revendications 24, dans lequel les charges/agents texturants comprennent une matière choisie dans le groupe consistant en des carbonates, le calcaire, des silicates, une argile, l'alumine, le talc, l'oxyde de titane, des phosphates de calcium, ces matière cellulosiques et leurs associations.

26. Procédé suivant l'une quelconque des revendications 1 à 25, dans lequel le mélangeur comprend un seul appareil de mélange à pales.

27. Procédé suivant l'une quelconque des revendications 1 à 25, dans lequel le mélangeur comprend au moins deux appareils de mélange à pales en série.

28. Mélangeur à pales de base de gomme à mâcher destiné à être utilisé dans la production continue d'une base de gomme à mâcher à partir d'ingrédients comprenant un élastomère, un plastifiant d'élastomère, un agent ramollissant/émulsionnant et une charge ;
le mélangeur comprenant une pluralité d'éléments de malaxage et d'éléments de transport placés et portés sur un ou plusieurs arbres, les éléments de malaxage comprenant des pales de mélange, les pales de mélange couvrant au moins 30% des arbres pour des mélangeurs ayant un rapport L/D supérieur à 40/1 et au moins 40% d'un ou plusieurs arbres pour les autres mélangeurs, et étant adaptées de telle sorte que les pales de mélange mélangent les ingrédients de base de gomme sans faciliter un transport vers l'avant significatif des ingrédients à travers le mélangeur, et au moins un des éléments de transport étant disposé de manière à transporter les ingrédients de la base de gomme vers l'avant à travers le mélangeur ;
la disposition des pales de mélangeur et d'autres éléments de malaxage étant telle que le mélangeur produit de manière continue une base de gomme à partir des ingrédients sans qu'une quelconque quantité d'un ou plusieurs des ingrédients n'ait à être mélangée de manière homogène avec un ou plusieurs quelconques des autres ingrédients par l'introduction dans le mélangeur.

29. Mélangeur suivant la revendication 28, dans lequel les pales du mélangeur couvrent au moins 40% du ou des arbres.

30. Mélangeur suivant la revendication 28, dans lequel les pales du mélangeur couvrent au moins 60% du ou des arbres.

31. Mélangeur suivant l'une quelconque des revendications 28 à 30, dans lequel les éléments de malaxage sont disposés sur deux arbres rotatifs parallèles dans le mélangeur.

32. Mélangeur suivant la revendication 31, dans lequel les deux arbres tournent dans le même sens au cours du mélange.

33. Mélangeur suivant la revendication 31, dans lequel les arbres sont corotatifs.

34. Mélangeur suivant l'une quelconque des revendications 29 à 33, dans lequel les pales du mélangeur sont disposées sélectivement à des positions de rotation relatives différentes sur les arbres.

35. Mélangeur suivant l'une quelconque des revendications 28 à 34, dans lequel chaque pale de mélange comprend deux surfaces de mélange convexes.

36. Mélangeur suivant l'une quelconque des revendications 28 à 35, dans lequel une proportion dominante des éléments de malaxage est constituée de pales plates.

37. Mélangeur suivant l'une quelconque des revendications 28 à 36, dans lequel une proportion secondaire des éléments de malaxage est constituée de pales hélicoïdales.

38. Mélangeur suivant l'une quelconque des revendications 28 à 37, dans lequel les pales du mélangeur ont une hauteur, une largeur, et un rapport de la hauteur à la largeur supérieur à 1,5:1.

39. Mélangeur suivant la revendication 38, dans lequel le rapport de la hauteur à la largeur est supérieur à 2:1.

40. Mélangeur suivant l'une quelconque des revendications 28 à 39, le mélangeur ayant une longueur et un diamètre maximal des pales du mélangeur, le rapport de la longueur du mélangeur au diamètre maximal des pales étant égal à au moins 4:1.

41. Mélangeur suivant la revendication 40, dans lequel le rapport de la longueur du mélangeur au diamètre maximal des pales du mélangeur est égal à au moins 7:1.
